# EUROPÄISCHE PATENTSCHRIFT

(11) **EP 3 135 197 B1**
(45) Veröffentlichungstag und Bekanntmachung des Hinweises auf die Patenterteilung: **15.06.2022**
(21) Anmeldenummer: 16001873.5
(22) Anmeldetag: 26.08.2016
(51) Int. Cl.: G01N 21/05, G01F 1/661, G01N 21/53

(54) **HALTEVORRICHTUNG FÜR EINEN SCHLAUCH**
HOLDING DEVICE FOR A HOSE
DISPOSITIF DE FIXATION DE TUYAU

(30) Priorität: 31.08.2015 DE 102015011065; 04.12.2015 DE 102015015587
(43) Veröffentlichungstag der Anmeldung: 01.03.2017
(73) Patentinhaber: em-tec GmbH, 86923 Finning (DE)
(72) Erfinder: Huber, Elmar, 86916 Kaufering (DE); Bober, Maciej, 86919 Utting am Ammersee (DE); Burkhard, Manfred, 86911 Dießen (DE)
(74) Vertreter: Castell, Klaus

(56) Entgegenhaltungen:
- WO-A1-2010/136962
- JP-A- 2011 110 249
- JP-U- S5 551 777
- US-A- 4 136 818
- US-A- 4 764 166
- US-A- 5 061 451
- US-A- 6 144 444
- US-A1- 2013 317 408
- US-B1- 8 714 030

## Beschreibung

Die Erfindung betrifft eine Haltevorrichtung für einen Schlauch, die einen Sensor, eine Schlauchaufnahme, einen Einführkanal und einen Stempel aufweist, wobei der Stempel beweglich ist, um den Schlauch in der Schlauchaufnahme zu halten und eine Entnahme des Schlauchs aus der Schlauchaufnahme zu ermöglichen.

Insbesondere für medizinische Anwendungen werden an einem Schlauch Sensoren befestigt, die es ermöglichen, ein im Schlauch geführtes Medium zu untersuchen. Dazu kann die Haltevorrichtung am Schlauch angeklemmt werden. Hierzu kann der Schlauch wie in der US 2012/0318069 A1 gezeigt in eine Rinne gelegt werde und dort gehalten werden. Je nach Schlauchdurchmesser und Schlauchmaterial wird der Schlauch jedoch beim Einklemmen verformt, was auf einen zu hohen Klemmdruck oder ein nicht optimales Positionieren des Schlauches zurückzuführen ist. Insbesondere die in der US 2012/0318069 A1 beschriebene Haltevorrichtung klemmt den Schlauch derart ein, dass Beschädigungen des Schlauches nicht auszuschließen sind.

Um den Schlauch innerhalb der Haltevorrichtung nicht zu beschädigen schlägt die US 5,463,906 einen Küvetteneinsatz vor, an den der Schlauch angeschlossen wird. Dadurch wird die Vorrichtung jedoch aufwendig und der Fluss des Mediums wird am Übergang zur Küvette beeinträchtigt.

Andere Klemmeinrichtungen drücken mit einem Andruckstempel auf den Schlauch, um die Haltevorrichtung am Schlauch zu halten. Auch dies führt jedoch häufig zu starken Verformungen des Schlauchs und oftmals zu Beschädigungen des Schlauchs.

Die US 4,136,818 zeigt eine gattungsgemäße Haltevorrichtung, bei der mittels eines sich senkrecht zum Deckel erstreckenden Stempels der Schlauch in eine Schlauchaufnahme gedrückt wird und mit einer quaderförmigen Dichtung das Austreten von Licht aus der Vorrichtung verhindert wird. Insbesondere für einen Schlauch aus einem flexiblen Schlauchmaterial ist diese Vorrichtung ungeeignet, da dann auch bei dieser Vorrichtung der Schlauch verformt wird und das Strömungsprofil asymmetrisch wird, wodurch die Messergebnisse beeinträchtigt werden.

Der Erfindung liegt die Aufgabe zugrunde, eine derartige Haltevorrichtung so weiter zu entwickeln, dass sie sicher an einen Schlauch gehalten werden kann, ohne den Schlauch zu beschädigen.

Die Aufgabe wird mit einer gattungsgemäßen Haltevorrichtung nach Anspruch 1 gelöst, bei der der Stempel um einen Anlenkpunkt an der Schlauchaufnahme gebogen ist und der Einführkanal gebogen ist und eine Bewegung des Stempels den Schlauch in die Schlauchaufnahme und in eine definierte Position relativ zum Sensor so drückt, dass durch die spezielle Ausbildung des gebogenen Stempels in Verbindung mit dem gebogenen Einführkanal der Schlauch derart in der Haltevorrichtung angeordnet werden kann, dass bei einem Bestrahlen des Schlauches durch eine Lichtquelle direkte Strahlung nur auf den Schlauch trifft.

Dabei ermöglicht das Schwenken des gebogenen Stempels eine optimale Positionierung des Schlauches in der Schlauchaufnahme. Außerdem ermöglicht ein geschwenkter Stempel eine Anordnung eines Schlauches derart in einer Schlauchaufnahme, dass der Schlauch auf einem vorgegebenen Weg geführt wird, um in die Schlauchaufnahme gelegt und aus ihr entnommen zu werden. Dies führt dazu, dass der Schlauch in einem ersten Arbeitsschritt sicher in der Schlauchaufnahme positioniert wird und in einem zweiten Arbeitsschritt der gebogene Stempel den Schlauch in der Aufnahme positioniert. Dabei kann der Schlauch durch den Stempel vorsichtig in der Schlauchaufnahme in seine optimale Position geführt werden.

Durch die spezielle Ausbildung des gebogenen Stempels in Verbindung mit einem Einführkanal wird es möglich, den Schlauch derart in der Haltevorrichtung anzuordnen, dass bei einem Bestrahlen des Schlauches durch eine Lichtquelle direkte Strahlung nur auf den Schlauch trifft und nicht aus der Haltevorrichtung dringt. Dies ist besonders vorteilhaft, wenn die Lichtquelle ein Laserlicht aussendet. Vor allem wenn ein Laserlicht verwendet wird, das für das menschliche Auge nicht sichtbar ist und/oder das menschliche Auge beschädigen kann, ist es vorteilhaft, wenn auch bei einer geöffneten Haltevorrichtung zumindest keine direkte Lichtstrahlung aus der Haltevorrichtung dringen kann.

Vorteilhaft ist es, wenn der Stempel eine abgerundete Anlagefläche für den Schlauch aufweist. Dies führt dazu, dass der Schlauch durch die abgerundete vorzugsweise auf den Durchmesser des Schlauches abgestimmte Anlagefläche insbesondere im Bereich des Sensors optimal, flächig gehalten wird.

Entsprechend ist es vorteilhaft, wenn die Schlauchaufnahme eine abgerundete Anlagefläche für den Schlauch aufweist. Der Schlauch kann dann in seiner definierten Position relativ zum Sensor zwischen dem Stempel und der Schlauchaufnahme optimal gehalten werden.

Dabei ist es vorteilhaft, wenn Stempel und Schlauchaufnahme einen Rohrbereich bilden, um den Schlauch zu halten und diesen an den Schlauchaufnahme einzuklemmen. Dieser Rohrbereich hat einen Durchmesser, der dem Durchmesser des Schlauches entspricht, oder der Rohrbereich hat einen geringfügig kleineren Durchmesser als der Schlauch, um den Schlauch etwas zu verformen, um die Haltevorrichtung sicher am Schlauch zu befestigen. Im Hinblick auf die Reibung zwischen Haltevorrichtung und Schlauch ist eine Verformung des Schlauches jedoch nicht notwendig.

Um mit einem Sensor Signale zu empfangen, kann der Sensor beispielsweise im rechten Winkel zum Sender angeordnet werden. Der Sender strahlt dann seine Signale auf den Schlauch und seitlich zum Schlauch empfängt der Sensor die durch das Medium erzeugten Signale.

Bei einer Rückwärtsvariante ist der Sensor auf der Seite des Senders angeordnet. Dabei strahlt der Sender Signale auf den Schlauch. Dort werden die Signale gewandelt und reflektiert und von dem beim Sender angeordneten Sensor empfangen.

Für die Haltevorrichtung ist es besonders vorteilhaft, wenn sie einen Sender aufweist, der dem Sensor gegenüberliegend angeordnet ist. Bei dieser Vorwärtsvariante liegt der Sensor auf der Achse des Senders. Dies ist insbesondere für akustische, optische und opto-akustische Wellen von Vorteil.

Die Haltevorrichtung weist eine Lichtquelle als optischen oder opto-akustischen Sender und einen Einführkanal für den Stempel auf, wobei die Lichtquelle derart angeordnet ist, dass der direkte Strahlengang des Lichts, auch wenn der Stempel nicht im Einführkanal angeordnet ist, nicht durch den Einführkanal aus der Haltevorrichtung dringt.

Um Streulicht, insbesondere auf dem Weg zwischen Lichtquelle und Schlauch zu vermeiden, wird vorgeschlagen, dass zwischen der Lichtquelle und der Schlauchaufnahme ein Lichtkanal angeordnet ist. Dieser Lichtkanal ist vorzugsweise derart lang ausgebildet, dass er ein Einlegen und eine Entnahme des Schlauches an der Schlauchaufnahme nicht behindert, das Licht im Lichtkanal möglichst nah an den Schlauch heranführt.

Dies wird konstruktiv besonders einfach dadurch erreicht, dass der Lichtkanal länger als 5 mm ist. Dadurch kann die Lichtquelle beabstandet zum Schlauch angeordnet werden und im Lichtkanal kann der Lichtstrahl gebündelt werden. Dabei ist es vorteilhaft, wenn der Lichtkanal bei einem größeren Schlauchdurchmesser auch eine größere Länge aufweist, sodass es eine Mindestlänge bezogen auf den Schlauchdurchmesser hat. Die Länge des Lichtkanals kann dabei mindestens das 0,5-fache des Schlauchdurchmessers sein. In der Praxis liegen vorteilhafte Längen eines Lichtkanals bei dem 0,5-fachen bis 1,2-fachen des Durchmessers des zur Haltevorrichtung passenden Schlauchdurchmessers.

Eine schnelle, einfache Benutzung der Haltevorrichtung wird dadurch erzielt, dass der Stempel an einem an der Schlauchaufnahme schwenkbar befestigten Deckel angeordnet ist. Dies erlaubt es, mittels des Deckels die Haltevorrichtung abzuschließen und den Stempel zu führen, wobei der Stempel bei geschlossenem Deckel seine definierte Schlauchhalteposition einnimmt.

Um zu fühlen oder zu hören, dass der Deckel geschlossen ist und der Stempel seine optimale Position erreicht hat, wird vorgeschlagen, dass der Deckel rastend in einer definierten Position anordenbar ist. Solange diese rastende Position nicht erreicht wird, kann der Nutzer davon ausgehen, dass der Schlauch noch nicht optimal eingelegt ist.

Mit einer Rasteinrichtung kann auch das ungewollte Öffnen des Deckels verhindert werden. Dazu wird vorgesehen, dass eine, vorzugsweise rastende, Verriegelung erst dann freigegeben wird, wenn eine Sicherungseinrichtung das Öffnen freigegeben hat.

Um auch indirekte Lichtstrahlung zu vermeiden, wird vorgeschlagen, dass der Stempel eine lichtabsorbierende Schicht aufweist. Hierzu können zumindest Bereiche der Haltevorrichtung, wie insbesondere der Stempel und der Einführkanal dunkel eingefärbt werden, eine spezielle Oberflächenstruktur aufweisen oder die lichtabsorbierende Schicht wird durch die Materialeigenschaften des Stempelmaterials erzielt. Kumulativ oder alternativ können auch die Schlauchaufnahme und der Einführkanal eine lichtabsorbierende Schicht aufweisen.

Die Haltevorrichtung kann eine Klemmkraft auf den Schlauch ausüben, um ein Verrutschen der Haltevorrichtung relativ zum Schlauch zu vermeiden.

Kumulativ oder alternativ wird vorgeschlagen, dass die Schlauchaufnahme gekrümmt ist, um einen gebogenen Schlauch einzulegen. Ein in eine gekrümmte Schlauchaufnahme eingelegter gebogener Schlauch führt zu einer besonderen Reibung zwischen Haltevorrichtung und Schlauch, die insbesondere bei einem Schlauch mit einer gewissen Rückstellkraft noch erhöht wird. Über den Krümmungsradius und die Länge der gekrümmten Strecke sowie die Materialoberflächen von Schlauch und Haltevorrichtung kann die Reibung derart beeinflusst werden, dass gegebenenfalls auch ohne Reduktion des Schlauchdurchmessers die Haltevorrichtung sicher am Schlauch gehalten werden kann.

Eine gekrümmte Schlauchaufnahme hat auch den Vorteil, dass im Schlauch für eine Messung verwendete Strahlung schlechter aus der Haltevorrichtung austreten kann. Die Haltevorrichtung wirkt dann wie eine Lichtfalle für optische Sender, um Streustrahlung zu vermeiden.

Um sicher zu stellen, dass ein Sender und insbesondere ein opto-akustischer Sender erst Signale aussenden, wenn die Haltevorrichtung geschlossen ist, wird vorgeschlagen, dass die Haltevorrichtung einen Stempeldetektor zur Überwachung der Stempelposition aufweist. Dies ermöglicht es, den Öffnungsgrad des Deckels relativ zur Schlauchaufnahme zu überwachen. Wird der Deckel nicht ordnungsgemäß verschlossen bzw. arretiert, bleibt der Sender der Haltevorrichtung deaktiviert. Die Kontrolle der Deckelposition minimiert im Fehlerfall die direkte und indirekte Strahlung.

Um einen Schlauch in der Schlauchaufnahme zu erkennen, wird vorgeschlagen, dass die Haltevorrichtung einen Schlauchdetektor zur Überwachung der Schlauchposition aufweist. Hierzu können sich in der Schlauchführung eine oder mehrere Schlauchdetektionseinheiten befinden. Befindet sich kein Schlauch in der Schlauchführung, ist der Sensor deaktiviert. Diese Maßnahme dient dazu, Streustrahlung im Fehlerfall zu minimieren.

Ein Schlauchdetektor kann auf unterschiedliche Art und Weise realisiert werden: elektrische Schalter, optisch, induktiv, kapazitiv und als Kraft/Druckaufnehmer mittels relativem Drucksensor, Dehnungsstreifen oder einem Piezodrucksensor.

Um den Betriebszustand der Haltevorrichtung anzuzeigen, wird vorgeschlagen, dass sie einen Statusindikator zur Anzeige des Zustands der Haltevorrichtung aufweist. Als Statusindikator kann ein LED-Licht oder auch eine mechanische Anzeige dienen.

Bei vielen Messaufgaben ist das Messergebnis von der Temperatur des untersuchten Mediums abhängig. Daher wird vorgeschlagen, dass die Haltevorrichtung einen Temperatursensor aufweist. Dies ermöglicht es, direkt an der Haltevorrichtung die Temperatur des Mediums zu ermitteln, sodass möglichst gleichzeitig die Mediumtemperatur und die vom Medium abgegebenen Signale mit Sensoren ermittelt werden können.

Der Deckel kann als Clamp-On Deckel ausgebildet sein, um bei der Führung des Stempels einen konzentrischen Druck auf den Schlauch über die gesamte Länge des Messwandlers auszuüben. Dadurch wird eine asymmetrische Schlauchverformung verhindert.

Durch die einfache geometrische Schlauchführung kann der Sensor besonders leicht gereinigt und desinfiziert werden.

Da entweder keine oder nur eine sehr geringe Schlauchverjüngung vorgesehen ist, verringert sich die Gefahr der Hämolyse bei Messungen mit Blut.

Durch die geführte Schlaucheinführung und den auf der gesamten Länge gleichmäßig verteilten Druck werden die Übergänge und Durchgänge von akustischer, optischer und/oder opto-akustischer Signale mit niedrigen Verlusten (hoher Kopplungsgrad) zwischen Sender, Messobjekt und Empfänger übertragen.

Besonders vorteilhaft ist es weiterhin, dass der Schlauch an der Einlegestelle im Bereich der Schlauchführung nicht angefasst werden muss. Dadurch werden Verschmutzungen im Bereich der Messstrecke vermieden. Da der Schlauch nicht von Hand, sondern über den geführten Stempel in die Schlauchführung gedrückt wird, kann der Kopplungsgrad zwischen Sender, Medium und Empfänger erhöht werden.

Die spezielle Anordnung der Lichtquelle führt dazu, dass der Strahlengang des Lichtes dem Sichtfeld des Anwenders entgegengerichtet ist. Dies bedingt eine intrinsische Sicherheit. Dadurch ist kein direktes Einblicken in den Lichtstrahl möglich und Streustrahlung wird durch einen Lichtkanal räumlich begrenzt.

Der vom Stempel gebildete gekrümmte Überstand am Deckel wirkt wie eine Lichtfalle gegen Streulicht.

Der Temperatursensor kann die Temperatur des Schlauches und/oder des Mediums vorzugsweise mit einem Infrarotsender ermitteln. Diese zusätzliche Temperaturermittlung bei opto-akustischen Antworten hilft die Temperaturabhängigkeit der Grüneisenparameter zu kompensieren. Bei akustischen Antworten kann der Temperatureinfluss auf die Schallgeschwindigkeiten berücksichtigt werden.

Ein Ausführungsbeispiel einer Haltevorrichtung ist in der Zeichnung dargestellt und wird im Folgenden beschrieben. Es zeigt
- Figur 1: eine dreidimensionale erste Seitenansicht einer Haltevorrichtung,
- Figur 2: eine dreidimensionale zweite Seitenansicht der in Figur 1 gezeigten Haltevorrichtung,
- Figur 3: eine Seitenansicht der in Figur 1 gezeigten Haltevorrichtung mit geöffnetem Deckel,
- Figur 4: eine teilweise geschnittene Seitenansicht der in Figur 1 gezeigten Haltevorrichtung und

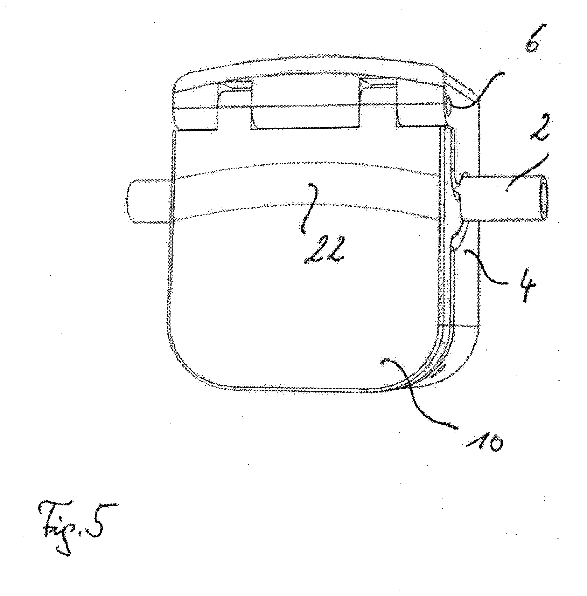

- Figur 5: eine dreidimensionale Draufsicht auf die in Figur 1 gezeigte Haltevorrichtung.

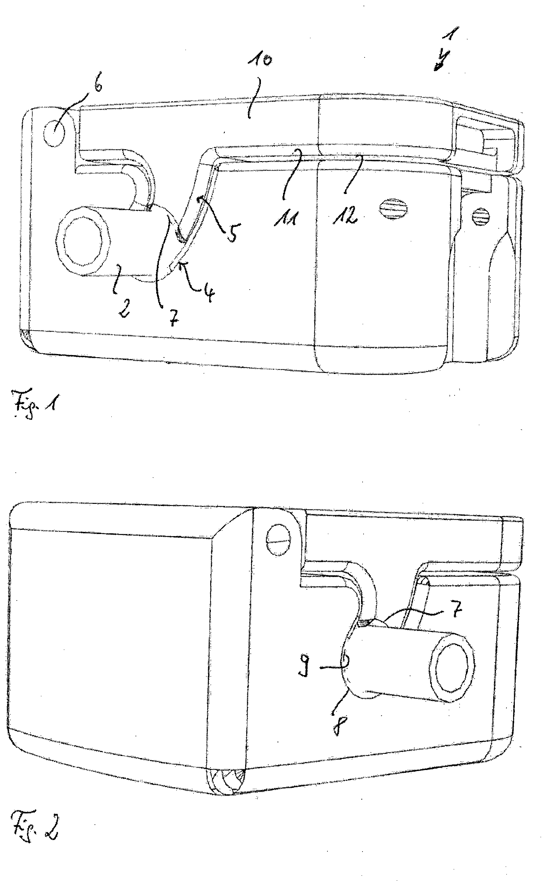

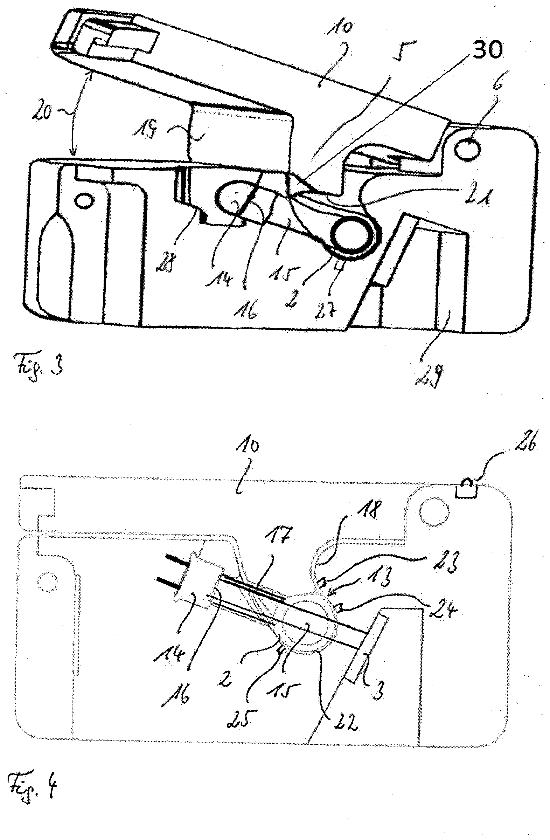

Die in Figur 1 gezeigte Haltevorrichtung 1 ist an einem Schlauch 2 angeklemmt, um mit einem in der Haltevorrichtung 1 angeordneten Sensor 3 (vgl. Figur 4) ein im Schlauch 2 geführtes Medium zu untersuchen. Der Schlauch 2 wird in der Schlauchaufnahme 4 mit dem Stempel 5 gehalten. Der Stempel 5 ist um den Anlenkpunkt 6 schwenkbar an der Schlauchaufnahme 4 befestigt und um diesen Anlenkpunkt 6 leicht gebogen ausgebildet.

Dies ermöglicht es, den Schlauch 2 in die Schlauchaufnahme 4 zu legen und mittels des Stempels 5 in die Schlauchaufnahme und in die in Figur 1 gezeigte definierte Position relativ zum Sensor 3 zu drücken.

Um den Schlauch 2 vorsichtig in die Schlauchaufnahme 4 drücken zu können, hat der Stempel 5 eine abgerundete Anlagefläche 7. Die abgerundete Anlagefläche 8 der Schlauchaufnahme 4 dient dazu, den Schlauch sicher in der Schlauchaufnahme 4 zu halten.

Dadurch bilden der Stempel 5 und die Schlauchaufnahme 4 einen Rohrbereich 9, in dem der Schlauch 2 gehalten wird. Die Anlagefläche 7 des Stempels 5 umgreift den Schlauch auf einem Kreissegment von weniger als 180° und vorzugsweise zwischen 45° und 80°, während die abgerundete Fläche 8 der Schlauchaufnahme 4 den Schlauch auf einem Kreissegment von mindestens 150° und vorzugsweise mehr als 170° umfasst. Eine spezielle Ausführungsform sieht eine Anlagefläche 8 vor, die den Schlauch um mehr als 180° umfassen kann, sodass der Schlauch gegen einen kleinen Widerstand in die Schlauchaufnahme gedrückt wird.

Der Stempel 5 ist an einem Deckel 10 angeordnet, der über den Anlenkpunkt 6 an der Schlauchaufnahme 4 befestigt ist. Dieser Deckel 10 hat eine Unterseite 11, die an einer Oberseite 12 der Schlauchaufnahme 4 anliegt, wenn der Stempel 5 den Schlauch 2 in die definierte Position 13 relativ zum Sensor 3 gedrückt hat. Eine Rasteinrichtung (nicht gezeigt) führt dazu, dass beim Schließen des Deckels 10 fühlbar ist, wenn die definierte Position 13 des Schlauches 2 relativ zur Schlauchaufnahme 4 erreicht ist. In dieser Position kann der Deckel 10 mittels einer Verriegelungseinrichtung (nicht gezeigt) mit der Schlauchaufnahme 4 derart verbunden werden, dass der Stempel 5 nicht mehr um den Anlenkpunkt 6 geschwenkt werden kann. Die Verriegelungseinrichtung kann die Rasteinrichtung derart blockieren, dass eine Öffnung nur dann möglich ist, wenn eine Sicherungseinrichtung vorher die Verriegelung und damit die Verrastung freigegeben hat. Dabei sollte vermieden werden, dass der Deckel versehentlich geöffnet wird.

Die Verriegelungseinrichtung kann mit der Rasteinrichtung kombiniert werden, indem der Deckel beim Verriegeln in der Schlauchaufnahme einrastet oder die Schlauchaufnahme mit dem Deckel rastend verriegelt wird.

In den Figuren 3 und 4 ist der Sender 14 gezeigt, der dem Sensor 3 gegenüberliegend angeordnet ist. Dieser Sender 14 ist im Ausführungsbeispiel eine Laserlichtquelle, die einen Strahlengang 15 erzeugt, der zwischen der Lichtquelle 16 und dem Schlauch 2 in einem Lichtkanal 17 geführt ist. Dieser Lichtkanal 17 ist im Ausführungsbeispiel etwa 10 mm lang und in der Praxis ergibt sich die Länge in Abhängigkeit vom Schlauchdurchmesser, um den Strahlengang 15 der Lichtquelle 16 zu bündeln und ein Austreten von Streulicht zu vermeiden.

Das Austreten von direktem und indirektem Licht aus der Schlauchaufnahme 4 wird auch durch den gebogenen Einführkanal 18 minimiert, indem der gebogene Stempel 5 geführt ist. Beim Öffnen und Schließen des Deckels 10 bildet der Stempel 5 einen Sichtschutz 19, der den Blick in die Schlauchaufnahme 4 verhindert.

Beim Öffnen des Deckels 10 entsteht zwischen Deckel 10 und Schlauchaufnahme 4 ein Öffnungswinkel, der sich im Wesentlichen zum Anlenkpunkt 6 verjüngt. Der Strahlengang 15 ist im Wesentlichen parallel zu diesem Öffnungswinkel geführt, sodass die Lichtquelle 16 das Licht zur Seite der Schlauchaufnahme 4 richtet, an der der Anlenkpunkt 6 angeordnet ist.

Dadurch wird erreicht, dass ein Blick in Richtung der Verjüngung des Winkels 20 etwa gleichgerichtet mit dem Strahlengang 15 des Lichtes ist, wodurch vermieden wird, dass direkte Lichtstrahlen aus der Haltevorrichtung zum Betrachter hin entweichen.

Streustrahlung wird insbesondere dadurch vermieden, dass der Deckel 10 und der Stempel 5 eine lichtabsorbierende Schicht 21 aufweisen.

Da angestrebt ist, dass der Stempel 5 den Schlauch 2 möglichst wenig verformt, liegt der Schlauch 2 in einer Rinne 22, die sich senkrecht zur Bildebene der Abbildung in Figur 4 erstreckt. Diese Rinne führt am Sender 14 und am Sensor 3 entlang, womit ein in die Rinne 22 eingelegter Schlauch zwischen dem Sender 14 und dem Sensor 3 angeordnet ist. Diese Rinne 22 kann auf einer senkrecht zur Bildebene verlaufenden Achse gebogen sein, um ein Verrutschen der Haltevorrichtung 1 relativ zum Schlauch 2 und ein Austreten von Streustrahlung aus der Vorrichtung zu verhindern.

Ein Stempeldetektor 23 an der Schlauchaufnahme 4 dient der Überwachung der Position des Stempels 5 im Einführkanal 18, damit der Sender 14 und vorzugsweise die Lichtquelle 16 erst eingeschaltet werden können, wenn der Deckel 10 und damit auch der Stempel 5 in der geschlossenen Position den Einführkanal 18 verschließen.

Mehrere Schlauchdetektoren 24, 25 dienen der Überwachung der Position des Schlauchs 2. Dadurch kann vermieden werden, dass der Sender 14 und vorzugsweise die Lichtquelle 16 eingeschaltet werden, wenn kein Schlauch 2 eingelegt ist oder der Schlauch 2 nicht ordnungsgemäß eingelegt ist.

Eine LED zeigt als Statusanzeiger 26 den Zustand der Haltevorrichtung. Diese LED kann beispielsweise grün leuchten, wenn der Schlauch ordnungsgemäß eingelegt ist und der Deckel 10 eingerastet ist. Sofern ein Detektor ein negatives Signal meldet, ist die Anzeige des Statusindikators 26 rot.

Um den mittels des Sensors 3 ermittelten Wert optimal auswerten zu können, ist ein Temperatursensor 27 in der Nähe des Schlauches 2 angeordnet, der die Temperatur des Schlauches und/oder die Temperatur des im Schlauch geführten Mediums misst. Dafür ist im Ausführungsbeispiel der Temperatursensor 27 von der Schlauchaufnahme 4 thermisch entkoppelt.

Um die Reparatur der Haltevorrichtung zu erleichtern, weist die Schlauchaufnahme 4 eine Aufnahme 28 auf, in die der Sender 14 eingesetzt werden kann, und eine weitere Aufnahme 29, in der der Sensor 3 geschützt angeordnet ist.

## Patentansprüche

1. Haltevorrichtung (1) für einen Schlauch (2), die einen Sensor (3), eine Schlauchaufnahme (4), einem Einführkanal (18) und einen Stempel (5) aufweist, wobei der Stempel (5) beweglich ist, um den Schlauch (2) in der Schlauchaufnahme (4) zu halten und eine Entnahme des Schlauches (2) aus der Schlauchaufnahme (4) zu ermöglichen, wobei die Haltevorrichtung eine Lichtquelle (16) als optischen oder optoakustischen Sender aufweist, **dadurch gekennzeichnet dass** die Lichtquelle derart angeordnet ist, dass der direkte Strahlengang (15) des Lichts, auch wenn der Stempel (5) nicht im Einführkanal angeordnet ist, nicht durch den Einführkanal (1) aus der Haltevorrichtung (1) dringt, wobei der Stempel (5) um einen Anlenkpunkt (6) an der Schlauchaufnahme (4) gebogen ist und der Einführkanal (18) gebogen ist und eine Bewegung des Stempels (5) den Schlauch (2) in die Schlauchaufnahme (4) und in eine definierte Position (13) relativ zum Sensor (3) so drückt, dass durch die Ausbildung des gebogenen Stempels in Verbindung mit dem gebogenen Einführkanal der Schlauch derart in der Haltevorrichtung angeordnet werden kann, dass bei einem Bestrahlen des Schlauches durch eine Lichtquelle direkte Strahlung nur auf den Schlauch trifft.

2. Haltevorrichtung nach Anspruch 1, ***dadurch gekennzeichnet, dass*** der Stempel (5) eine abgerundete Anlagefläche (7) für den Schlauch (2) aufweist.

3. Haltevorrichtung nach einem der vorhergehenden Ansprüche, ***dadurch gekennzeichnet, dass*** die Schlauchaufnahme (4) eine abgerundete Anlagefläche (8) für den Schlauch (2) aufweist.

4. Haltevorrichtung nach einem der vorhergehenden Ansprüche, ***dadurch gekennzeichnet, dass*** Stempel (5) und Schlauchaufnahme (4) einen Rohrbereich (9) bilden, um den Schlauch (2) einzuklemmen und zu halten.

5. Haltevorrichtung nach einem der vorhergehenden Ansprüche, ***dadurch gekennzeichnet, dass*** sie einen Sender (14) aufweist, der dem Sensor (3) gegenüberliegend angeordnet ist.

6. Haltevorrichtung nach einem der vorhergehenden Ansprüche, ***dadurch gekennzeichnet, dass*** zwischen der Lichtquelle (16) und der Schlauchaufnahme (4) ein Lichtkanal (17) angeordnet ist.

7. Haltevorrichtung nach Anspruch 6, ***dadurch gekennzeichnet, dass*** der Lichtkanal (17) länger als 5 mm ist.

8. Haltevorrichtung nach einem der vorhergehenden Ansprüche, ***dadurch gekennzeichnet, dass*** der Stempel (5) an einem an der Schlauchaufnahme (4) schwenkbar befestigten Deckel (10) angeordnet ist.

9. Haltevorrichtung nach Anspruch 8, ***dadurch gekennzeichnet, dass*** der Deckel (10) rastend in einer definierten, insbesondere geschlossenen, Position anordenbar ist.

10. Haltevorrichtung nach einem der vorhergehenden Ansprüche, ***dadurch gekennzeichnet, dass*** der Stempel (5), die Schlauchaufnahme oder der Einführkanal eine lichtabsorbierende Schicht (21) aufweist.

11. Haltevorrichtung nach einem der vorhergehenden Ansprüche, ***dadurch gekennzeichnet, dass*** die Schlauchaufnahme (4) eine gekrümmte Rinne (22) aufweist, um einen gebogenen Schlauch (2) einzulegen.

12. Haltevorrichtung nach einem der vorhergehenden Ansprüche, ***dadurch gekennzeichnet, dass*** sie einen Stempeldetektor (23) zur Überwachung der Position des Stempels (5) aufweist.

## Claims

1. A holding device (1) for a hose (2), which comprises a sensor (3), a hose seating fixture (4), a feed-in channel (18) and a stamp (5), wherein the stamp (5) is movable in order to hold the hose (2) in the hose seating fixture (4) and to enable removal of the hose (2) from the hose seating fixture (4), wherein the holding device comprises a light source (16) as an optical or opto-acoustic transmitter, **characterised in that** the light source is arranged in such a way that the direct beam path (15) of the light, even when the stamp (5) is not arranged in the feed-in channel, does not penetrate through the feed-in channel (1) out of the holding device (1), wherein the stamp (5) is curved around an anchor point (6) on the hose seating fixture (4) and the feed-in channel (18) is curved and a movement of the stamp (5) presses the hose (2) into the hose seating fixture (4) and into a defined position (13) relative to the sensor (3), in a way such that, as a result of the formation of the curved stamp in connection with the curved feed-in channel, the hose can be arranged in the holding device in a way such that direct radiation strikes only the hose when the hose is irradiated by a light source.

2. The holding device according to claim 1, ***characterised in that*** the stamp (5) has a rounded seating surface (7) for the hose (2).

3. The holding device according to any one of the preceding claims, ***characterised in that*** the hose seating fixture (4) has a rounded seating surface (8) for the hose (2).

4. The holding device according to any one of the preceding claims, ***characterised in that*** stamp (5) and hose seating fixture (4) form a pipe region (9) in order to clamp and hold the hose (2).

5. The holding device according to any one of the preceding claims, ***characterised in that*** it comprises a transmitter (14), which is arranged opposite the sensor (3).

6. The holding device according to any one of the preceding claims, ***characterised in that*** a light channel (17) is arranged between the light source (16) and the hose seating fixture (4).

7. The holding device according claim 6, ***characterised in that*** the light channel (17) is longer than 5 mm.

8. The holding device according to any one of the preceding claims, ***characterised in that*** the stamp (5) is arranged on a cover (10) fastened in a swivelling manner to the hose seating fixture (4).

9. The holding device according to claim 8, ***characterised in that*** the cover (10) can be arranged latched in a defined, in particular closed, position.

10. The holding device according to any one of the preceding claims, ***characterised in that*** the stamp (5), the hose seating fixture or the feed-in channel comprises a light-absorbing layer (21).

11. The holding device according to any one of the preceding claims, ***characterised in that*** the hose seating fixture (4) comprises a curved groove (22) in order to place the curved hose (2) therein.

12. The holding device according to any one of the preceding claims, ***characterised in that*** it comprises a stamp detector (23) for monitoring the position of the stamp (5).

## Revendications

1. Dispositif de retenue (1) d'un flexible (2), lequel comporte un capteur (3), un réceptacle (4) de flexible, un canal d'introduction (18) et un poinçon (5), le poinçon (5) étant mobile, pour retenir le flexible (2) dans le réceptacle (4) de flexible, et pour permettre un retrait du flexible (2) du réceptacle (4) de flexible, le dispositif de retenue comportant une source lumineuse (16), faisant office d'émetteur optique ou opto-acoustique, ***caractérisé en ce que*** la source lumineuse est placée de telle sorte que, même si le poinçon (5) n'est pas placé dans le canal d'introduction, le faisceau lumineux (15) direct de la lumière ne pénètre pas hors du dispositif de retenue (1) dans le canal d'introduction (1), le poinçon (5) étant recourbé autour d'un point d'articulation (6) sur le réceptacle (4) de flexible et le canal d'introduction (18) étant recourbé, et un déplacement du poinçon (5) pressant le flexible (2) dans le réceptacle (4) de flexible et dans une position (13) définie telle par rapport au capteur (3), que par la conception du poinçon recourbé, en association avec le canal d'introduction recourbé, le flexible puisse être placé dans le dispositif de retenue de telle sorte que lors d'une irradiation du flexible par une source lumineuse, un rayonnement direct ne soit incident que sur le flexible.

2. Dispositif de retenue selon la revendication 1, ***caractérisé en ce que*** le poinçon (5) comporte une surface d'appui (7) arrondie pour le flexible (2).

3. Dispositif de retenue selon l'une quelconque des revendications précédentes, ***caractérisé en ce que*** le réceptacle (4) de flexible comporte une surface d'appui (8) arrondie pour le flexible (2).

4. Dispositif de retenue selon l'une quelconque des revendications précédentes, ***caractérisé en ce que*** le poinçon (5) et le réceptacle (4) de flexible forment une zone tubulaire (9), pour coincer et pour retenir le flexible (2).

5. Dispositif de retenue selon l'une quelconque des revendications précédentes, ***caractérisé en ce qu'***il comporte un émetteur (14), qui est placé au vis-à-vis du capteur (3).

6. Dispositif de retenue selon l'une quelconque des revendications précédentes, ***caractérisé en ce qu***'entre la source lumineuse (16) et le réceptacle (4) de flexible est placé un canal lumineux (17).

7. Dispositif de retenue selon la revendication 6, ***caractérisé en ce que*** le canal lumineux (17) a une longueur supérieure à 5 mm.

8. Dispositif de retenue selon l'une quelconque des revendications précédentes, ***caractérisé en ce que*** le poinçon (5) est placé sur un couvercle (10) fixé en pivotement sur le réceptacle (4) de flexible.

9. Dispositif de retenue selon la revendication 8, ***caractérisé en ce que*** le couvercle (10) est susceptible d'être placé par enclenchement dans une position définie, notamment fermée.

10. Dispositif de retenue selon l'une quelconque des revendications précédentes, ***caractérisé en ce que*** le poinçon (5), le réceptacle de flexible ou le canal d'introduction comportent une couche (21) absorbant la lumière.

11. Dispositif de retenue selon l'une quelconque des revendications précédentes, ***caractérisé en ce que*** le réceptacle (4) de flexible comporte une gorge (22) curviligne, pour insérer un flexible (2) recourbé.

12. Dispositif de retenue selon l'une quelconque des revendications précédentes, ***caractérisé en ce qu***'il comporte un détecteur (23) de poinçon, pour superviser la position du poinçon (5).
